Europäisches Patentamt

European Patent Office

Office européen des brevets

(11) Publication number: **0 262 703**
**A1**

## (12) EUROPEAN PATENT APPLICATION

(21) Application number: **87201629.0**

(22) Date of filing: **28.08.87**

(51) Int. Cl.⁴ **B23P 19/00** , B23P 19/06 ,
E01B 29/24

(30) Priority: **22.09.86 IT 8341186**

(43) Date of publication of application:
**06.04.88 Bulletin 88/14**

(84) Designated Contracting States:
**AT BE CH DE FR GB LI LU NL SE**

(71) Applicant: **DANIELI & C. OFFICINE
MECCANICHE S.p.A.
Via Nazionale, 19
I-33042 Buttrio (UD)(IT)**

Applicant: **ITC/CLM IMPIANTI TECHNICI
INDUSTRIALI SpA
Via Nazionale 69
I-33042 Buttrio (ud)(IT)**

(72) Inventor: **Mancini, Flavio
Via Amba D'Oro 3
I-25100 Brescia(IT)**

(74) Representative: **Petraz, Gilberto Luigi
G.L.P. S.a.s. di Gilberto Petraz P.le Cavedalis
6/2
I-33100 Udine(IT)**

(54) **Mechanical positioner device.**

(57) Mechanical positioner device for wrench units which screw, or screw partially, the nuts on the bolts to connect rails to sleepers, which is suitable to be fitted to machines or units delivering clamping components and/or to machines which bolt the rails to the sleepers, and comprises a support (21) able to oscillate crosswise to the axis of a rail (11) and bearing a positioner lever (27) suitable to oscillate lengthwise to such rail (11) and able to cooperate with an end (114) of a lodgement (14) for a bolt (17).

fig.1

EP 0 262 703 A1

Xerox Copy Centre

## "MECHANICAL POSITIONER DEVICE"

This invention concerns a mechanical positioner device for use in making automatic or semi-automatic connections of rails to sleepers. To be more exact, the invention provides a device to perform correct positioning of a wrench unit which screws, or screws partially, the nuts on the bolts, such unit being employed to fasten rails to sleepers automatically or semi-automatically.

The device of the invention is fitted properly to machines which bolt rails of the type described and claimed in EP 143.477, EP 149.278 and EP 153.772 and to like and analogous machines.

Many problems arise when rails are being bolted to sleepers with complex machines which arrange at least for the positioning, or prior positioning, of some of the elements employed to clamp the rail to the sleeper.

As regards the screwing, or partial screwing, of the nut on the bolt, the problems arise from the fact that the tolerances of the threads on the bolt and those of the threads on the nut are such as to create in themselves problems regarding the fitting together, alignment and correct mutual tightening of these two components.

Furthermore, if the nut is to be threaded correctly onto the bolt, it is necessary in any event that their mutual alignment should be as true as possible.

Moreover, the nut must act substantially on the same axis as the bolt and there should not be any great displacement of the nut from the axis of the bolt.

These and other problems are typical of cases where the rails are bolted, or partially bolted, to the sleepers by automatic or semi-automatic machines working directly along a railway roadbed.

To overcome such drawbacks and create new, additional advantages, the present applicant has studied, tested and embodied this invention.

According to the invention the positioner device cooperates with a bolt or with a lodgement for a bolt, and therefore a machine of the type cited above may comprise as many positioner devices as there are bolts which can be positioned and tightened by the machine substantially at one and the same time.

We shall deal hereinafter with one single mechanical positioner device for the sake of simplicity of the description.

According to the invention a mechanical positioner device is provided which cooperates directly with the lodgement of a bolt comprised in a plate previously installed on the sleeper.

To be more exact, the invention provides for the mechanical positioner device to cooperate with one end of the bolt lodgement so as to position itself in relation to the axis of the bolt and also to position the bolt itself.

By means of cooperation with the end of the bolt lodgement the accuracy of alignment or of positioning of the power wrench used to screw, or to screw partially, the nut, in relation to the axis of the clamping bolt is very great.

According to the invention a mechanical positioner device is caused to cooperate with one of the ends of the bolt lodgement, such device acting beforehand on a sensor.

If the actuation caused by the excitation of the sensor on the means which pull and clamp the support frame on the rail is not sufficient, the device provides for a mechanical clamp by the introduction of an appropriate mechanical abutment.

According to the invention the device takes up at least two positions crosswise to the rail: one of these positions is for positioning and alignment purposes, whereas the other position is for free passage along the rail, thus enabling work to be carried out at a timed rate on each sleeper in relation to each bolt lodgement included on each sleeper.

Moreover, the device is equipped with means for aligning the axis of the bolt crosswise to the rail.

The invention is therefore embodied with a mechanical positioner device for wrench units which screw, or screw partially, the nuts on the bolts to connect rails to sleepers, which is suitable to be fitted to machines or units delivering clamping components and/or to machines which bolt the rails to the sleepers, and is characterized in that it comprises a support able to oscillate crosswise to the axis of a rail and bearing a positioner lever suitable to oscillate lengthwise to such rail and able to cooperate with an end of a lodgement for a bolt.

The attached figures, which are given as a non-restrictive example, show the following:-

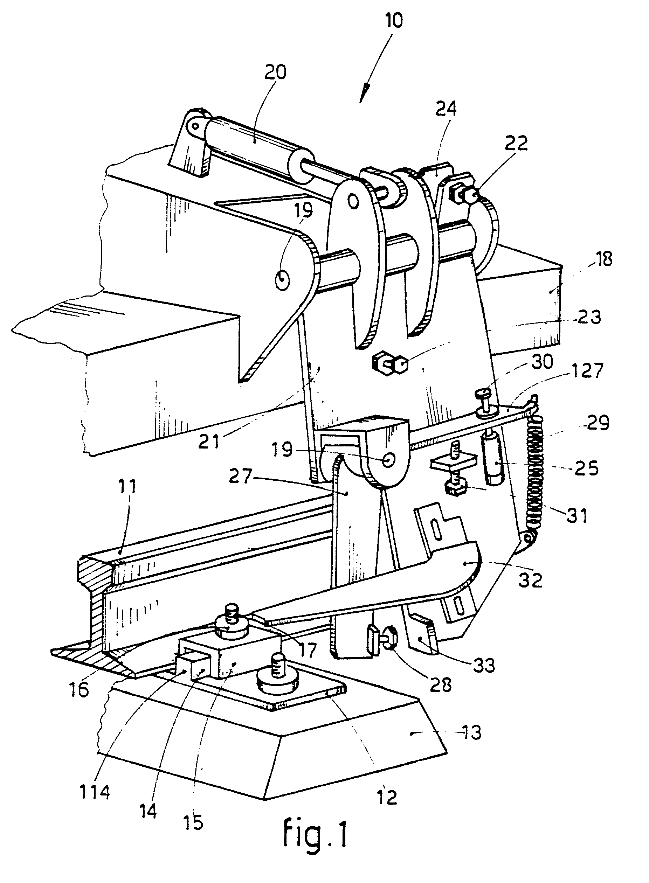

Fig.1 gives a three dimensional view, deformed for illustrative purposes, of a device according to the invention;

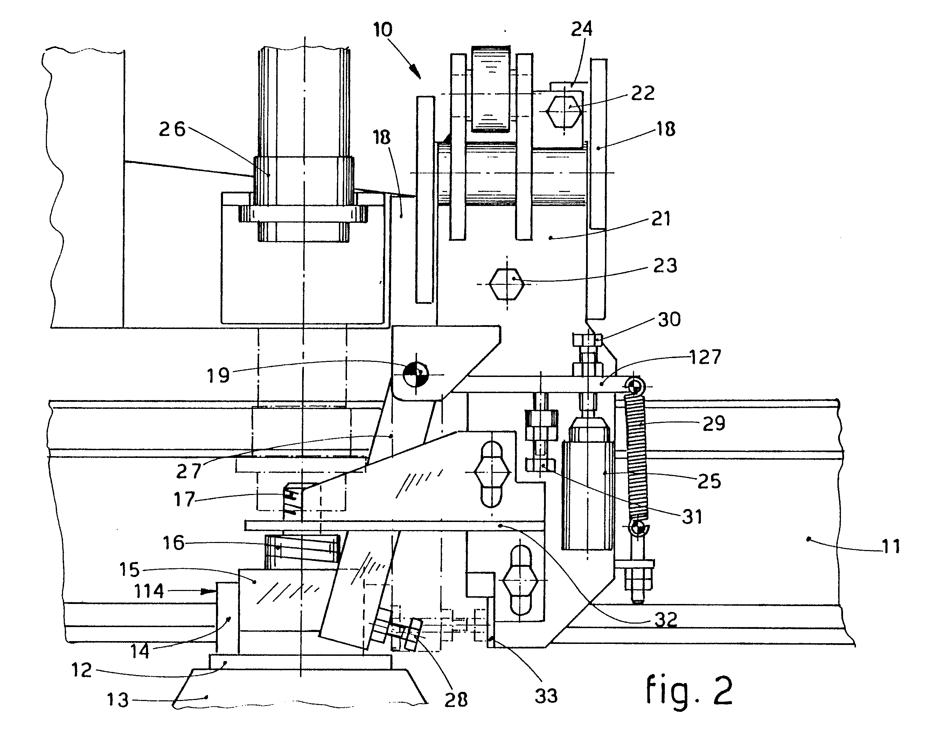

Fig.2 gives a front view of a device according to the invention illustrated according to a working drawing;

Fig.3 is a side view of the device of Fig.2.

In the figures all the rotation pivots performing the same function bear the reference 19.

A device 10 is fitted to a frame 18 borne on a machine of the type indicated previously, which bolts rails to sleepers and runs on rails 11 positioned on plates 12 located beforehand on sleepers 13.

Such frame 18 is halted momentarily in correspondence with each bolt 17 so as to enable the operations of screwing, or screwing partially, a nut on the bolt to be carried out. Such temporary halt is brough about by suitable brakes, which anchor themselves advantageously to the rail 11.

Such braking systems and the means to support the momentarily halted frames 18 on a machine still in movement are known. Otherwise, the machine too may halt at each bolt-tightening position, but this would entail longer downtimes.

The plates 12 comprise lodgements 14 within which the head of the bolt 17 is lodged and positioned; the bolt lodgements 14 include ends 114.

A clip 15 and thereafter a washer 16 have been fitted to the bolt 17 earlier before a nut is screwed, or screwed partially, on the bolt.

Such screwing or partial screwing of the nut is carried out fully or partially by power wrenches 26, which may themselves bear the nut or which are fed beforehand with a nut.

Such power wrenches 26 carrying out full or partial tightening of the nut are able to move along their own axis and apply to the nut the proper direction or rotation and thrust required in each tightening step.

If the nut is to be fitted correctly to the bolt 17, it is necessary that the axis of the wrench 26 should coincide as exactly as possible with the axis of the bolt 17.

To obtain this, the present applicant has used for lengthwise positioning purposes one of the ends 114 of the bolt lodgement and has provided a device 10 that cooperates with such end 114, thereby taking that end as a lengthwise abutment point to position the wrench 26.

The device 10 comprises a positioner lever 27 integrally fixed to a lever portion 127, which is able to act on a sensor 25 by means of a first adjustment screw 30.

The lever portion 127 cooperates advantageously with a return spring 29, which tends to keep the lever itself 27 always free in the direction of forward movement of the machine which bolts the rails.

The lever 27 may comprise a second adjustment screw 28 to provide a micrometric adjustment of the position of the axis of the wrench 26 in relation to the position of the axis of the bolt, thus assuming the lengthwise distance between the end 114 of the bolt lodgement 14 and the axis of the bolt 17 itself to be almost constant.

When the lever 27 is displaced to act against the end 114 of the bolt lodgement 14, it is thrust towards an abutment 33 until the second adjustment screw 28 meets the abutment 33.

When the first adjustment screw 30, by acting on the sensor 25, causes actuation of the brake and clamps the frame 18 within the time and space allowed, there is a normal combined actuation and the second adjustment screw 28 is brought against the abutment 33.

As we said, the brake has not been shown here so as not to complicate the description, but it is known in the prior art.

Instead, if the brake does not succeed in halting the frame 18 in the required position and the frame 18 continues moving in the direction of forward movement of the machine, the second adjustment screw 28 resting against the abutment 33 thus creates a stationary wedge between the end 114 of the bolt lodgement 14 and the abutment 33 itself compels the frame 18 to halt in the required limit position.

With the frame 18 halted in the required position, the wrench 26 is correctly positioned since the second adjustment screw 28 enables micrometric adjustment of the positions to be obtained.

The travel of the lever 27 towards its open position may be conditioned by a travel limiting device 31 so as to advance, to a greater or lesser extent, the actuation of the sensor 25 by the first adjustment screw 30, the purpose being to take into account any special conditions of the environment, rails or brakes.

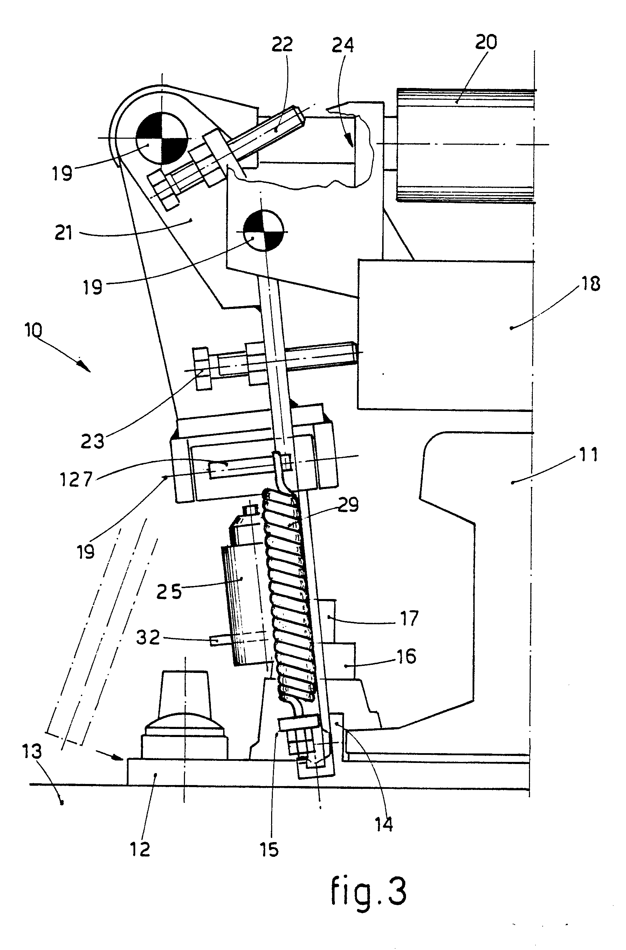

The device 10 provides also a support 21 able to oscillate and to cause the lever 27 to take up two crosswise positions, in one of which it can act against the end 114 of the bolt lodgement 14 or can act as in Fig.3, whereas in the other position the lever can be present in a position where it does not contact the plate 12 or the parts located on the plate 12.

The oscillatable support 21 is actuated by a jack 20 and comprises a travel regulator means 22 to determine the extent of its outward oscillation, such travel regulator means 22 cooperating with an abutment surface 24.

The oscillatable support 21 comprises also a position regulator means 23 which serves to position the lever 27 correctly in relation to the end 114 of the bolt lodgement 14. Such position regulator means 23 acts on any desired surface of the frame 18.

The oscillatable support 21 bears also an adjustable positioner lever 32, which serves to straighten the position of the bolt 17 and to locate the bolt transversely.

The positioning of the bolt 17 crosswise also to the rail 11 and its adjustment to a correct upright position provide a further improvement of the actuator relationship between the wrench 26 and the axis of the bolt 17.

The frame 18 may bear one or more mechanical positioner devices, or else two or more mechanical positioner devices may be connected so that one provides security for the other, or else one positioner device may serve two wrenches 26, for instance where nuts are to be tightened on bolts 17 positioned on both sides of the same rail 11.

## Claims

1 - Mechanical positioner device for wrench units which screw, or screw partially, the nuts on the bolts to connect rails to sleepers, which is suitable to be fitted to machines or units delivering clamping components and/or to machines which bolt the rails to the sleepers, and is characterized in that it comprises a support (21) able to oscillate crosswise to the axis of a rail (11) and bearing a positioner lever (27) suitable to oscillate lengthwise to such rail (11) and able to cooperate with an end (114) of a lodgement (14) for a bolt (17).

2 - Device as claimed in Claim 1, which (10) is positioned substantially upstream of a power wrench (26) of such units in the direction of movement of the machine.

3 - Device as claimed in Claim 1 or 2, in which the positioner lever (27-127) acts on a sensor (25) that conditions a brake.

4 - Device as claimed in any claim hereinbefore, in which the oscillatable support (21) has a working position for cooperation of the positioner lever (27) with the end (114) of the bolt lodgement (14) and a further position, placed laterally and crosswise to the axis of the rail (11), in which such lever (27) is out of contact.

5 - Device as claimed in any claim hereinbefore, in which the oscillatable support (21) comprises a second positioner lever (32) transverse to the axis of the bolt (17).

6 - Device as claimed in any claim hereinbefore, which comprises a second adjustment screw (28) to regulate the lengthwise halted position.

7 - Device as claimed in any claim hereinbefore, which comprises a travel limit means (31) and a first adjustment screw (30) to regulate the timing of actuation of the sensor (25).

8 - Device as claimed in any claim hereinbefore, in which the positioner lever (27-127) is held resiliently by a spring (29).

9 - Device as claimed in any claim hereinbefore, which comprises a means (23) to regulate the crosswise position of cooperation between the end (114) of the bolt lodgement (14) and the positioner lever (27).

10 - Device as claimed in any claim hereinbefore, in which the positioner lever (27) cooperates with an abutment (33) comprised on the oscillatable support (21) for the lengthwise mechanical positioning of the wrench (26).

fig.1

fig. 2

fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 295 170 (PLASSER) <br> * Page 1, line 1 - page 3, line 24 * <br> --- | 1-3 | B 23 P 19/00 <br> B 23 P 19/06 <br> E 01 B 29/24 |
| A | US-A-3 628 461 (PLASSER) <br> * Column 4, lines 3-31 * <br> --- | 1,2 | |
| A | US-A-1 652 881 (VIEZZI) <br> * Figures 7,10 * <br> ----- | 1 | |

TECHNICAL FIELDS
SEARCHED (Int. Cl.4)

B 23 P
E 01 B

The present search report has been drawn up for all claims

| Place of search | Date of completion of the search | Examiner |
|---|---|---|
| THE HAGUE | 02-12-1987 | RIS M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

BAD ORIGINAL